# EUROPEAN PATENT APPLICATION

(11) **EP 1 283 416 A2**
(43) Date of publication of application: **12.02.2003**
(21) Application number: 02016363.0
(22) Date of filing: 25.07.2002
(51) Int. Cl.: G01N 21/64, G02B 21/00

(54) **Biochip reader and fluorometric imaging apparatus**

(30) Priority: 09.08.2001 JP 2001241862; 09.08.2001 JP 2001241863
(71) Applicant: Yokogawa Electric Corporation, Tokyo 180-8750 (JP)
(72) Inventor: Tanaami, Takeo, Yokogawa Electric Corporation, Musashino-shi, Tokyo 180-8750 (JP)
(74) Representative: Henkel, Feiler, Hänzel

(57) **Abstract**

The present invention provides a biochip reader for reading the image information of samples using a photodetector device, by irradiating a corresponding beam of excitation light at each site of a biochip on which a plurality of the samples are arranged at equal pitches, the biochip reader comprising:
a microlens substrate provided with a plurality of microlenses to transform excitation light to be irradiated at the biochip into a multibeam; and
a zoom lens located between the microlens substrate and the biochip and capable of projecting the multibeam while adjusting the pitch between sites of the biochip to the pitch of the multibeam.

The present invention further provides a fluorometric imaging apparatus for detecting the image of a specimen by irradiating excitation light at samples on the specimen arranged in a two-dimensional manner and measuring fluorescent light produced from a fluorescent substance attached to the specimen, the fluorometric imaging apparatus comprising:
a two-dimensional photodetector device for detecting excitation light passing through the specimen or reflecting off the surface thereof; and
movement means for repositioning the specimen according to images observed on the photoreceptor device.

## Description

### BACKGROUND OF THE INVENTION

### Field of the Invention

The present invention relates to a biochip reader for reading weak fluorescent light produced by exciting samples on a biochip with excitation light. More specifically, the present invention relates to improvements made to accelerate measurement, simplify the apparatus, reduce damage to samples, flatten the intensity distribution within the spot of light produced when a beam of excitation laser light is condensed with a microlens, and enable free definition of the pitch at which samples on a biochip are arranged.

The present invention further relates to a fluorometric imaging apparatus for measuring biochips of DNA, RNA, protein, and the like and, more specifically, to the positioning of specimens.

### Description of the Prior Art

Conventionally, there have been apparatuses for marking DNA or protein with a fluorescent substance, irradiating the DNA or protein with laser light to excite the fluorescent substance, reading fluorescent light thus produced, and detecting and analyzing the DNA or protein. In this case, biochips are used wherein DNA or protein marked with a fluorescent substance is spotted on sites of a biochip arranged in arrays.

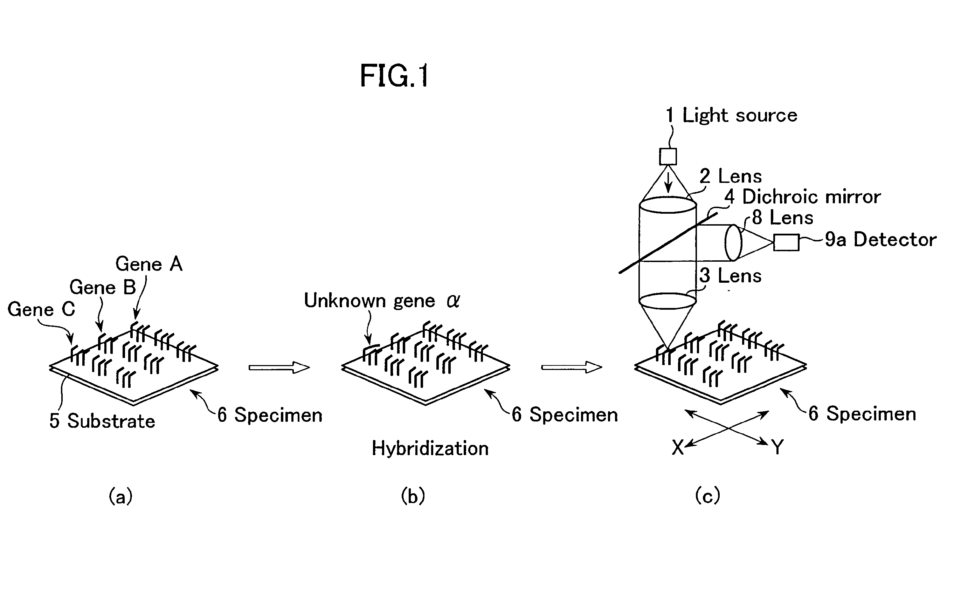

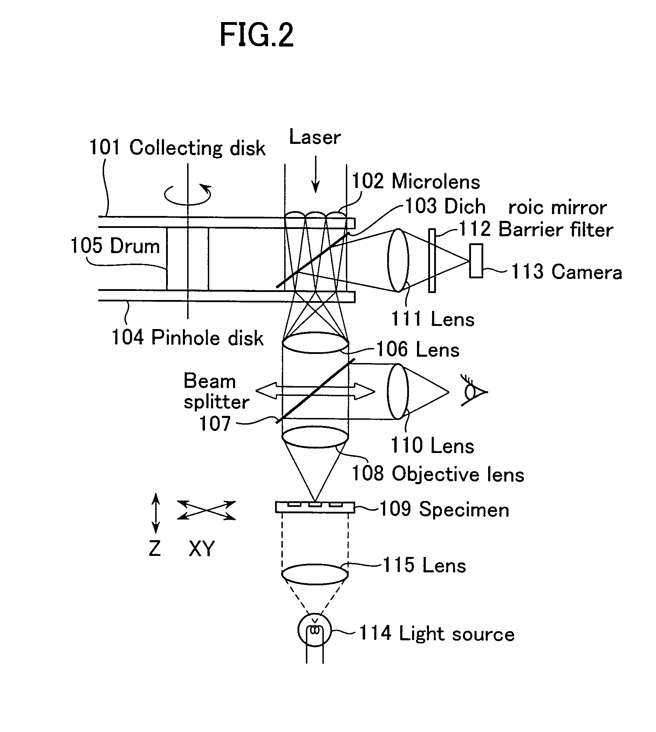

FIG. 1 is a conceptual schematic view showing one example of a conventional epi-illuminated biochip reader. By using the mechanism shown in FIG. 1(c), this reader reads samples made, as shown in FIG. 1(b), by hybridizing unknown gene α with biochip 6 wherein a plurality of DNA molecules (genes) A, B, C ..., with a known sequence are arranged on substrate 5 as shown in FIG. 1(a). Note that such a mechanism as discussed above is the same as the prior art mechanism of FIG. 2 shown in the Patent Application 09/562,317 filed in the US by the inventors mentioned in the application concerned.

In FIG 1 (c), light (laser light) from light source 1 is collimated by lens 2, passes through dichroic mirror 4, and is condensed by lens 3 onto specimen 6 (biochip 6 in this example). Light returning from biochip 6 reverts to parallel light by means of lens 3, reflects off dichroic mirror 4, and forms an image on detector 9a by means of lens 8.

In this process, a stage (not shown in the figure) loaded with biochip 6 is moved in the XY direction by a drive means, so that the surface of biochip 6 is scanned and the image thereof obtained.

However, such a conventional apparatus as discussed above has had the following problems.

An image of the biochip's surface is obtained by scanning across the stage with a single spot of light being irradiated at biochip 6. This method has the disadvantage that the mechanism for moving the stage is too complex and requires extra time before the image is obtained.

Another disadvantage is that the intensity of light beams must be high enough for the method to be effective. Higher intensities of light may result in the problem, however, of bleaching of the fluorescent dyes of samples.

Yet another problem is that a spot of high-intensity light tends to saturate detector 9 or the A/D converter (not shown in the figure) subsequent to the detector and, therefore, the gain of the detector or converter must be lowered. Lowering the gain would result in the disadvantage, however, that weak light cannot be measured and the dynamic range is narrowed.

An object of the present invention is to solve the aforementioned problems by providing a biochip reader that eliminates the need for moving a stage on which samples are mounted, and avoids the risk of bleaching of fluorescent dyes. In addition, the biochip reader features a simple construction, making it possible to accelerate measurement, simplify the apparatus, reduce damage to samples, and flatten the intensity distribution within the spot of light produced when rays of excitation laser light are condensed with a microlens. Furthermore, the biochip reader makes it possible to freely define the pitch at which samples on a biochip are arranged, and measure even weak light emitted from the samples.

Traditionally, fluorometric imaging apparatuses for measuring fluorescent images using, for example, an epi-illuminated confocal laser microscope have been well known among those skilled in the art. As an example of the epi-illuminated confocal laser microscope, there is the confocal optical scanner described in the US Patent 5,428,475.

To be able to position a specimen using such an apparatus as discussed above, a dedicated positioning means is required. Although no such positioning means is shown for the aforementioned confocal optical scanner, the means can be materialized by applying, for example, the positioning method described on page 19 of the BME journal (Vol. 11, No. 10 (1997)) of the Japanese Society for Medical and Biological Engineering.

FIG. 2 is a schematic view showing one embodiment of the aforementioned fluorometric imaging apparatus. Beams of laser light (excitation light) are focused using a plurality of microlenses 102 formed on collecting disk 101, and condensed into the pinholes of pinhole disk 104. Collecting disk 101 and pinhole disk 104 are coupled with each other through drum 105, so that the pinholes are positioned at the focal points of the plurality of microlens, and the two disks rotate in an integral manner.

Excitation light projected through pinholes is collimated with lens 106, and then condensed onto specimen 109 with objective lens 108. Fluorescent light is produced when a fluorescent substance attached to specimen 109 is irradiated with excitation light. The fluorescent light thus produced then passes through objective lens 108 and lens 106, and converges onto the pinholes of pinhole disk 104, where fluorescent images of the specimen's surface are formed.

Fluorescent light that has passed through the pinholes reflects off dichroic mirror 103 located between collecting disk 101 and pinhole disk 104, passes through lens 111 and barrier filter 112, and forms an image on the photoreceptive surface of camera 113. Barrier filter 112 allows fluorescent light to pass therethrough but rejects background light with wavelengths other than that of the fluorescent light.

Note that beam splitter 107 is moved out of the optical path at the time of fluorescence measurement.

With such an apparatus configuration as described above, it is possible to scan specimen 109 with laser light (multi-beam light) and take a picture of the fluorescent image of specimen 109's surface with camera 113. At this point, positioning of specimen 109 in the horizontal direction (direction perpendicular to the optical axis, which is hereinafter referred to as the XY direction) and in the vertical direction (optical-axis direction, which is hereinafter referred to as the Z direction) prior to observation is carried out in the following manner:

With beam splitter 107 inserted in the optical path, a spot of light is projected onto specimen 109 from the illumination system located underneath specimen 109. Then, a spot image of specimen 109's top surface is visually observed through the observation system. The illumination system is configured so that light from light source 114 is collimated with lens 115, as shown in the figure, and then irradiated at specimen 108 as Koehler illumination.

Light absorbed and scattered by specimen 109 comes out from the top surface thereof, enters objective lens 108, reflects off beam splitter 107, and is introduced to lens 110. Thus, an image of the specimen's surface can be visually observed through lens 110.

When specimen 109 is positioned in the XY direction, specimen 109 is moved in the XY direction by means of a movement mechanism, in order to determine the area of the specimen to be observed. Note that a known movement mechanism can be used for this purpose and, therefore, the configuration of the mechanism is not explained and illustrated in this example.

Fluorometric imaging apparatuses are often used for such applications as fluorescence-based observation of the movement of specific proteins inside a cell. In this application, however, it is not possible to observe the entire cell by means of fluorescence alone. Since the method of this example permits the entire cell to be observed with transmitted light, it is easy to move the cell to the center of the screen.

When positioning specimen 109 in the Z direction, the specimen is moved in the Z direction (the movement mechanism is not shown in the figure) so that the specimen is placed in the position where images being observed are sharpest and most crisp.

However, such a positioning mechanism as discussed above not only has poor maneuverability but tends to be large in scale and therefore expensive. Another problem inherent with the mechanism is that it is troublesome to move the beam splitter out of or into the optical path.

### SUMMARY OF THE INVENTION

An object of the present invention is to solve the aforementioned problems by providing a fluorometric imaging apparatus that is simple in configuration and inexpensive, and permits easy positioning of specimens.

In order to achieve the aforementioned object, the present invention provides a scanless biochip reader for reading the image information of samples using a photoreceptor device, by irradiating a corresponding beam of excitation light at each site of a biochip on which a plurality of the samples are arranged at equal pitches, the biochip reader comprising:
a microlens substrate provided with a plurality of microlenses to transform excitation light to be irradiated at the biochip into a multibeam; and
a zoom lens located between the microlens substrate and the biochip and capable of projecting the multibeam while adjusting the pitch between sites of the biochip to the pitch of the multibeam.

According to such an apparatus configuration as discussed above, excitation light from the light source is transformed into a multibeam by means of microlenses and multiple beams are simultaneously irradiated at the specimen through the zoom lens. Accordingly, there is no need to perform optical scanning as has been conventionally done, thus simplifying the apparatus configuration.

If a comparison is made with reference to the same readout time, excitation light used for the biochip reader of the present invention can be made weaker, in inverse proportion to the number of beams, than that used for optical scanning. Since there is no need for irradiating high-intensity laser light as has been conventionally done, the apparatus of the present invention avoids the risk of bleaching of fluorescent dyes. In addition, it is possible to measure even weak fluorescent light.

Furthermore, since the biochip reader of the present invention uses a zoom lens, it is possible to easily change the pitch between beams for irradiating specimens. This means that the biochip reader offers another advantage that even if sites of a specimen are arranged at an arbitrary pitch, it is possible to make the pitch between the sites of the specimen agree with the pitch between beams.

In addition, the present invention provides a fluorometric imaging apparatus for detecting the image of a specimen by irradiating excitation light at samples on the specimen arranged in a two-dimensional manner and measuring fluorescent light produced from a fluorescent substance attached to the specimen, the fluorometric imaging apparatus comprising:
a two-dimensional photoreceptor device for detecting excitation light passing through the specimen or reflecting off the surface thereof; and
a movement means for repositioning the specimen according to images observed on the photoreceptor device.

With such an apparatus configuration as described above, it is possible to position the specimen by skillfully utilizing excitation light that passes through the specimen or reflects off the surface thereof, and that has not been used conventionally.

### BRIEF DESCRIPTION OF THE DRAWING

FIG. 1 is a schematic view showing one example of the prior art biochip reader.
FIG. 2 is a schematic view showing one example of a fluorometric imaging apparatus that can be realized using a combination of conventional units of equipment.
FIG. 3 is a schematic view showing one embodiment of the biochip reader in accordance with the present invention.
FIG. 4 is a schematic view showing another embodiment of the present invention.
FIG. 5 is a schematic view showing one embodiment of the fluorometric imaging apparatus in accordance with the present invention.
FIG. 6 is a schematic view showing another embodiment of the present invention.
FIG. 7 is a schematic view showing yet another embodiment of the present invention.

### DETAILED DESCRIPTION OF THE PREFERRED EMBODIMENTS

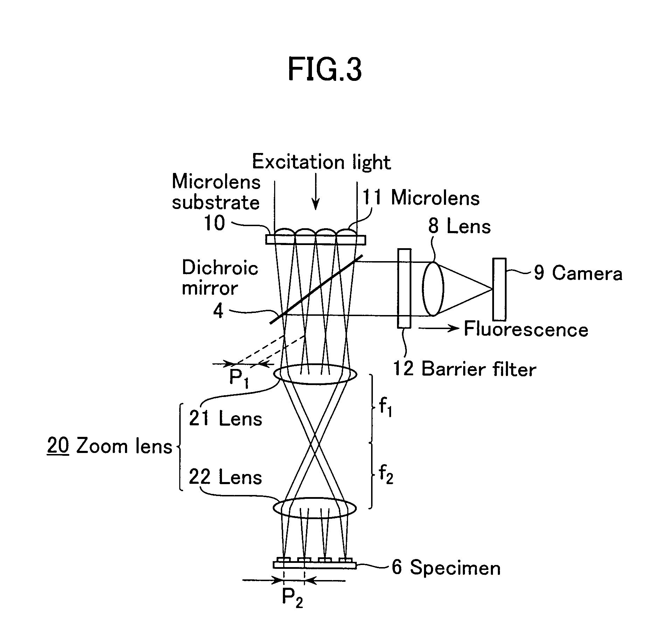

Now the present invention will be described in detail with reference to the accompanying drawings. FIG. 3 is a schematic view showing one embodiment of the biochip reader in accordance with the present invention. In the figure, elements identical to those shown in FIG. 1 are referenced alike and excluded from the description hereinafter presented.

In FIG. 3, numeral 10 denotes a microlens substrate, numeral 11 denotes a microlens, numeral 12 denotes a barrier filter, and numeral 20 denotes a telecentric zoom lens. On microlens substrate 10, a plurality of microlenses 11 are arranged at equal pitch P₁.

Zoom lens 20 comprises lens 21 with focal length f₁ and lens 21 with focal length f₂, where both focal length f₁ and focal length f₂ are variable. Zoom lens 20 is located between dichroic mirror 4 and specimen 6.

Note that although each of lenses 21 and 22 is illustrated as a single lens for the sake of convenience, these lenses are usually composed of multiple lenses.

Barrier filter 12, which is located between dichroic mirror 4 and lens 8, has the effect of letting fluorescent light arising from specimen 6 to pass through and rejecting light with wavelengths other than that of the fluorescent light.

In such an apparatus configuration as described above, excitation light projected from the topside of microlens substrate 10 is transformed into a multibeam by means of a plurality of microlenses 11, and perpendicularly enters zoom lens 20. In this case, light transformed into a beam with microlens 11 converges onto the focal point of microlens 11 (the pitch between points of convergence is defined as P₁), and then diverges again and enters zoom lens 20.

Each beam vertically projected from the lens 22 of zoom lens 20 is condensed (the pitch between points of convergence is defined as P₂) and spot-irradiates the surface of specimen 6.

At this point, it is possible to change the ratio of pitch P₁ to pitch P₂ between beams of excitation light by adjusting the zoom lens and thereby changing the ratio between focal lengths f₁ and f₂

It is also possible to vertically shift the position of the specimen so that the excitation light beams applied to the surface of the specimen become out of focus. When defocused, the spot of excitation light irradiated at the surface of the specimen becomes larger, thereby flattening the light intensity distribution within the specimen's surface. This means that samples on the specimen are irradiated with a uniform energy of luminance.

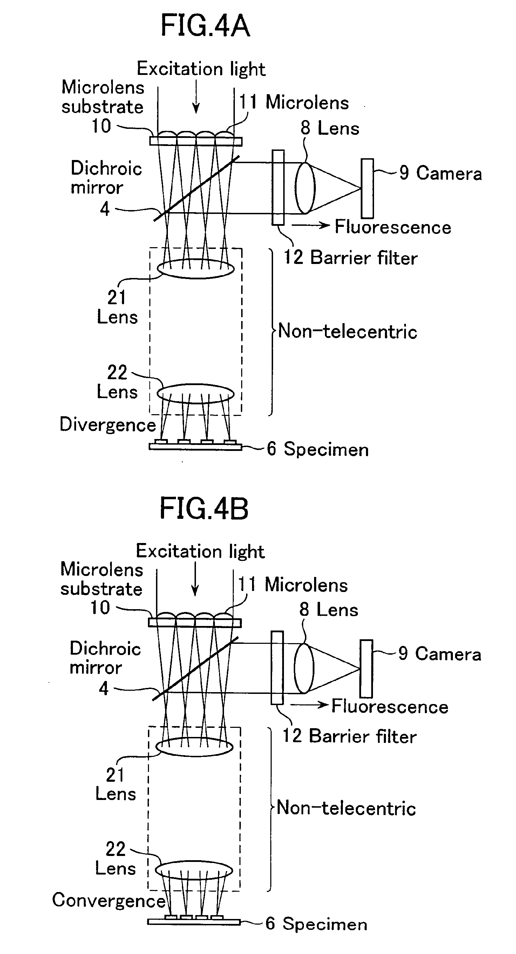

It should be noted that the above-described embodiments of the present invention are to be considered as illustrative and not restrictive. Accordingly, it should be understood that all modifications falling within the spirit and scope of the present invention are covered by the appended claims. For example, the zoom lens may be a non-telecentric lens, as shown in FIG. 4. In this case, excitation light beams projected from the zoom lens do not vertically enter the specimen's surface, but diverge as shown in FIG. 4(a) or converge as shown in FIG. 4(b). This modification does not pose any problem provided the beams are for the purpose of exciting the biochip.

As another modification, the portion ranging from dichroic mirror 4 to camera 9 of the apparatus of FIG. 3 may be located between lens 22 and specimen 6. Note that also in these modifications, the excitation light beams may be defocused to irradiate the specimen with a uniform energy of luminance.

As described heretofore, the present invention offers the following advantages.
(1) Since a specimen is irradiated with a multibeam, there is no need for moving a stage as has been conventionally done, resulting in a simpler apparatus configuration compared with the prior art apparatus.
(2) Since excitation light has been transformed into a multibeam, the light may be made weaker, in inverse proportion to the number of beams, than that used for optical scanning, if a comparison is made with reference to the same readout time. Since there is no need for irradiating high-intensity laser light as has been conventionally done, the apparatus of the present invention avoids the risk of bleaching of fluorescent dyes. In addition, it is possible to measure even weak fluorescent light.
(3) Since the pitch between spots of excitation light being irradiated at a specimen can be freely varied by adjusting the zoom lens, the pitch between samples on the specimen need not be fixed. Consequently, it is possible to read biochips of different kinds or for different purposes with just one biochip reader.
(4) By vertically shifting the position of a specimen, it is possible to easily defocus excitation light beams being irradiated at the specimen. Consequently, it is possible to irradiate the entire surface of each sample on the specimen with a virtually uniform energy of luminance.
(5) For the zoom lens, not only a telecentric lens but also a non-telecentric lens may be used. Even if beams being irradiated at samples diverge or converge and, therefore, obliquely enter the lens in the case of a non-telecentric lens, this poses no problems since the beams are for the purpose of exciting the biochip.

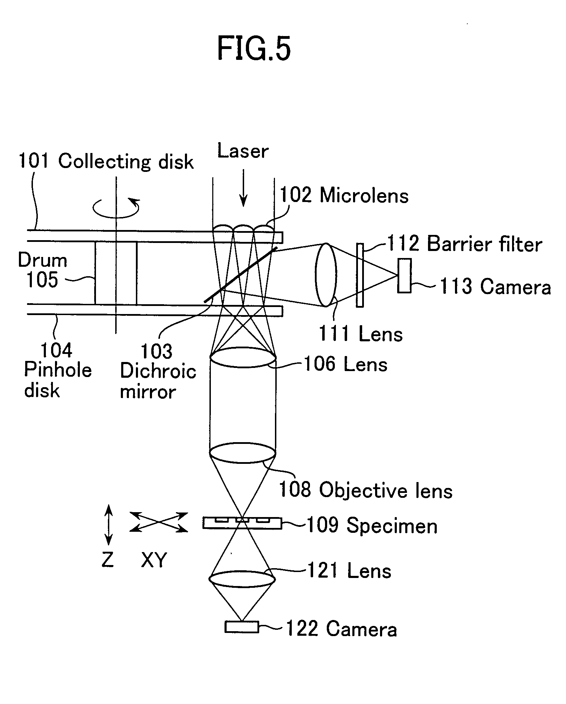

FIG. 5 is a schematic view showing one embodiment of the fluorometric imaging apparatus in accordance with the present invention. In FIG. 5, elements identical to those shown in FIG. 2 are referenced alike and excluded from the description hereinafter presented. FIG. 5 differs from FIG. 2 in that the illumination system composed of light source 114 and lens 115 and the spots-of-light observation system composed of beam splitter 107 and lens 110 are excluded, and lens 121 and camera 122 having a two-dimensional photoreceptor device are included instead.

Lens 121 condenses excitation light passing through specimen 109 onto the photoreceptive surface of camera 122. Thus, samples on the specimen arranged in a two-dimensional manner are irradiated with multiple beams of excitation light, enabling the image of the specimen to be observed on camera 122. In this case, it is also possible to observe the entire image of specimen 109 rather than images of the slices thereof.

Note that since each specimen 109 is scanned with condensed multiple beams, no speckle noise is produced in images observed on camera 122 even if a laser is used as the light source.

A conventional confocal fluorescence microscope does not make use of excitation light passing through specimen 109. In contrast, the present invention makes use of the light in order to position specimen 109. This is one of the characteristics of the present invention.

Positioning of specimen 109 in the XY direction is performed while checking images observed on camera 122. Positioning in the Z direction can be achieved by means of an auto-focusing mechanism (not shown in the figure). Note that the present invention is not limited to moving only the specimen in the X, Y and Z directions. Alternatively, the excitation light side of the apparatus may be moved by moving objective lens 108 in the X, Y and Z directions.

As an auto-focusing mechanism based on, for example, a maximum contrast method, it is possible to adopt a mechanism for automatically controlling the movement of the specimen in the Z direction so that the difference between the darkest and brightest points in images observed on camera 122 is maximum.

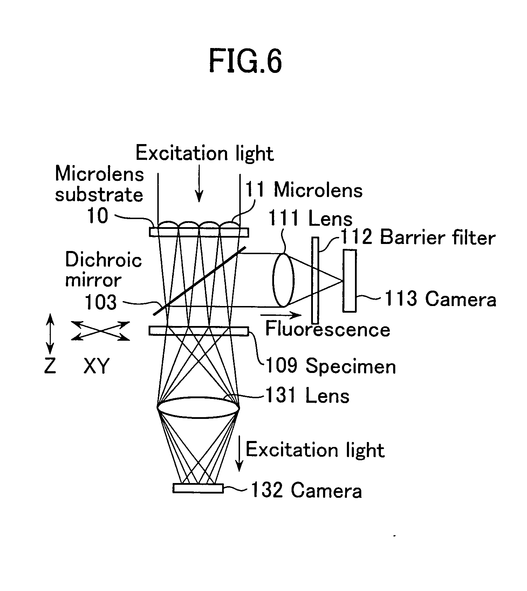

FIG. 6 is a schematic view showing another embodiment of the present invention. In contrast to the optically scanned confocal microscope of FIG. 5, FIG. 6 shows a non-optically-scanned (scanless) microscope. In FIG. 6, elements identical to those shown in FIG. 5 are referenced alike and excluded from the explanation hereafter presented.

In FIG. 6, numeral 10 denotes a microlens substrate where a plurality of microlenses 11 are arranged on a transparent substrate. Numeral 109 denotes a specimen, for which a DNA chip on which samples are arranged in a two-dimensional manner or a DNA microarray, for example, may be adopted. In this case, each microlens 11 and each site of specimen 109 are arranged in a one-to-one positional relationship.

In such an apparatus configuration as described above, each laser beam (excitation light) projected from the topside of microlens substrate 21 is condensed by each microlens 22, and each site of specimen 109 is irradiated with the condensed laser beam. The subsequent steps are the same as those explained with reference to FIG. 5. That is, fluorescent light emitted from specimen 109 is reflected by dichroic mirror 103, enters lens 111 and is condensed thereby, passes through barrier filter 112, and forms an image on the photoreceptor device of camera 113.

On the other hand, excitation light passing through specimen 109 converges onto the surface of the photoreceptor device of camera 132 by means of lens 131. Specimen 109 is positioned according to images observed on the photoreceptor device surface. Specimen positioning is the same as in the case of FIG. 5. That is, positioning in the XY direction is performed while checking images observed on camera 132. For positioning in the Z direction, the specimen is automatically positioned by means of an auto-focusing mechanism that functions according to observed images.

In such a scanless fluorescence microscope, the positions of each beam and each site must agree with each other. For this reason, the aforementioned method of positioning is extremely useful for the apparatus configuration of FIG. 6.

Note that markers for XYZ positioning may be provided on specimen 109, so that positioning in the XYZ directions is achieved on the basis of these markers.

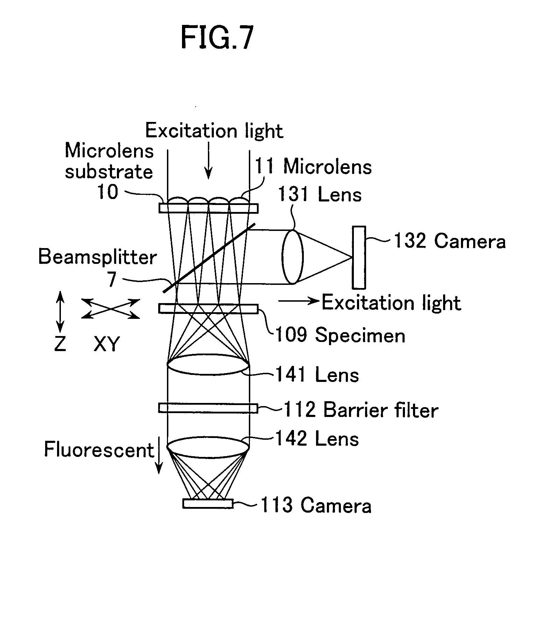

FIG. 7 is a schematic view showing yet another embodiment in accordance with the present invention. Unlike the scanless reflecting fluorescence microscope of FIG. 6, the apparatus of FIG. 7 is a scanless transmission fluorescence microscope. In FIG. 7, elements identical to those shown in FIG. 6 are referenced alike.

Fluorescent light produced in specimen 109 passes therethrough to enter lens 141, wherein the light is collimated, and enters lens 142. During this process, other types of light (known as background light) with wavelengths other than that of the fluorescent light are removed by barrier filter 112 inserted between lenses 141 and 142. The fluorescent light wherefrom background light has been removed is condensed by lens 142 and forms an image on the photoreceptor device surface of camera 113.

Catoptric light (excitation light), which reflects from specimen 109 and is used to position the specimen, reflects off beam splitter 7 to enter lens 131, whereby the light is focused, and converges onto the photoreceptor device surface of camera 132.

By applying such an apparatus configuration as described above, specimen positioning can be achieved in the same way as in the case of FIG. 6, according to images of the specimen's surface observed on the photoreceptor device.

As described heretofore, the following advantageous effects are provided by the present invention.
(1) Specimen positioning can be easily achieved by using excitation light that passes through or reflects from a specimen and has not been made use of in the prior art.
(2) The mechanism for specimen positioning is simpler and more economical compared with the prior art, and makes it possible to easily realize a fluorometric imaging apparatus with superior maneuverability.
(3) The present invention is applicable to either a scanning or scanless fluorescence microscope, as well as to either a transmission or reflecting fluorescence microscope. Thus, the present invention is significantly effective when used in practice.
(4) By combining the zooming system shown in FIG. 3 with the apparatus configuration shown in FIG. 6 or FIG. 7, it is possible to easily measure even specimens that have different pitches between the sites thereof.

## Claims

1. A biochip reader for reading the image information of samples using a photoreceptor device, by irradiating a corresponding beam of excitation light at each site of a biochip on which a plurality of said samples are arranged at equal pitches, said biochip reader comprising:
a microlens substrate provided with a plurality of microlenses to transform excitation light to be irradiated at said biochip into a multibeam; and
a zoom lens located between said microlens substrate and said biochip and capable of projecting said multibeam while adjusting the pitch between sites of said biochip to the pitch of said multibeam.

2. The biochip reader of claim 1 configured so that both beams of said multibeam condensed by a plurality of said microlens and samples mounted on said biochip are arranged at equal pitches.

3. The biochip reader of claim 1 or 2, wherein said zoom lens is either a telecentric lens or a non-telecentric lens.

4. The biochip reader of claim 1, 2 or 3 configured so that said multibeam projected from said zoom lens is made out of focus with reference to the surface of a specimen.

5. A fluorometric imaging apparatus for detecting the image of a specimen by irradiating excitation light at samples on said specimen arranged in a two-dimensional manner and measuring fluorescent light produced from a fluorescent substance attached to said specimen, said fluorometric imaging apparatus comprising:
a two-dimensional photoreceptor device for detecting excitation light passing through said specimen or reflecting off the surface thereof; and
movement means for repositioning said specimen according to images observed on said photoreceptor device.

6. The fluorometric imaging apparatus of claim 5, wherein said movement means is configured so that said specimen can be moved in an optical axis direction by means of an auto-focusing mechanism.

7. The fluorometric imaging apparatus of claim 5 configured so that excitation light transformed into a multibeam by means of microlenses is irradiated at said specimen.

8. The fluorometric imaging apparatus of claim 7 configured so that said specimen is optically scanned with a multibeam-based confocal optical scanner.

9. The fluorometric imaging apparatus of claim 7 configured so that said specimen is simultaneously scanned with multiple beams.

10. The fluorometric imaging apparatus of claim 5, 6, 7, 8 or 9, wherein markers for positioning in XYZ directions are provided on said specimen and said positioning in XYZ directions is achieved on the basis of said markers.
